(19) Europäisches Patentamt
European Patent Office
Office européen des brevets

(11) Publication number: **0 207 644**
**A1**

(12) **EUROPEAN PATENT APPLICATION**

(21) Application number: 86304285.9

(22) Date of filing: 05.06.86

(51) Int. Cl.⁴: B 01 D 53/20

(30) Priority: 06.06.85 US 742162

(43) Date of publication of application: 07.01.87 Bulletin 87/2

(84) Designated Contracting States: DE FR GB

(71) Applicant: CELANESE CORPORATION
1211 Avenue of the Americas
New York New York 10036(US)

(72) Inventor: Chen, John C.
793 Knollwood Terrace
Westfield New Jersey(US)

(74) Representative: De Minvielle-Devaux, Ian Benedict Peter et al,
CARPMAELS & RANSFORD 43, Bloomsbury Square
London WC1A 2RA(GB)

(54) **Fluid contactor elements of thermotropic liquid crystalline polymers.**

(57) Improved fluid contactor elements are formed by molding a composition consisting essentially of a self-reinforcing thermotropic liquid crystalline polymer. In preferred embodiments, the liquid contactor elements are formed by injection molding from compositions consisting essentially of such polymers selected from the group consisting of wholly aromatic polyesters, aromatic aliphatic polyesters, wholly aromatic poly(ester-amides), aromatic-aliphatic poly(ester-amides), aromatic polyazomethines, aromatic polyester carbonates, and mixtures of the foregoing. These materials have been found to provide a combination of high strength, high rigidity, high contact area, high specific volume, relatively low unit weight, and high resistance to corrosive chemicals and organic solvents, even at elevated temperatures and pressures. In a preferred embodiment the improved fluid contactor elements of the present invention are free of reinforcing agents and filler materials. The contactor elements provided herein have been found to be superior to similar elements molded of ceramics or prior art polymeric compositions for many chemical process applications.

EP 0 207 644 A1

Croydon Printing Company Ltd.

# FLUID CONTACTOR ELEMENTS OF LIQUID CRYSTALLINE POLYMERS

0207644

## Background of the Invention

Fluid-fluid contactor elements for use in packed towers for effecting various fluid-fluid contact processes are well known. Such a packed tower or other structure typically contains one or more beds of packing or fluid contactor elements and includes means for introducing the fluids to be brought in contact with each other in the bed. In many applications, the fluids are brought into contact in counter-current flow, the more dense fluid [i.e., the liquid in case of a gas(vapor)-liquid contact apparatus] flowing downwardly through the packed bed while the less dense fluid [i.e., the gas or vapor in the case of a gas (vapor)-liquid contact apparatus] flows upwardly through the bed. In other applications (e.g., cross-flow cooling towers) the fluid flows are generally at right angles to each other, for example with a liquid flowing downwardly through the bed while a gas or vapor flows across the bed. It is not necessary that both fluids be forcibly fed to the bed, and thus, for example in the case of a so-called sewage filtration bed, liquid effluent is irrigated onto the surface of a packed bed through which air is allowed to permeate (usually without forced flow) to permit aerobic biological treatment of the effluent. The present invention is concerned with and applicable to all apparatus in which two different fluids (including liquids, vapors and gases) are brought together in a packed bed for some contact or action between them.

Such fluid contactor elements are typically used in a packed tower to provide high surface area supports for various physical and chemical processes. Small individual elements which

may have a particle size ranging from small sand up to about three inches in diameter can be used. The elements are typically poured into the container or otherwise placed to form a packed column, filter bed, distillation column or the like. It is well understood by those skilled in the art that although very small elements provide tremendous surface area for a reaction, they also provide very great resistance to the flow of a fluid therethrough. On the other hand, larger elements, such as for example spheres of two to three inches in diameter, although providing less resistance to the flow of fluids, do not offer nearly the surface area available in smaller particles. Smaller particles tend to provide excessive flow resistance because they tend to pack together, leaving little or no space between adjacent particles for the flow of fluids. Nevertheless, when a high surface area has been desired in such packed column, it has been customary to use smaller size packing elements although this increases cost and weight and decreases the percentage of free space in the tower.

A wide variety of packing or fluid contact elements are known for use in such apparatus, for example, fabricated packings such as Raschig rings, Berl saddles, Intalox saddles and Pall rings. When elements such as Raschig rings or Pall rings are used, the beds may be stacked beds (i.e., beds in which the elements are individually placed in position) or dumped beds, in which at least a portion of the elements are dumped at random in the apparatus. Saddles or similar irregular-shaped elements are typically used in dumped beds.

In addition to the requirement for high surface area, many processes require that fluid contactor elements also have

the ability to withstand the turbulence of fluids flowing therethrough, vibrations, abrasions and other movements which would tend to destroy or otherwise break a fragile high-area contactor. In addition, the contactor element materials must be resistant to the elevated temperatures, corrosive chemicals and solvents typically encountered in many chemical processes.

Ceramic packing elements have been used in apparatus for many processes, and meet many of the requirements, but due to a combination of relatively high weight and fragility, they tend to chip, crack, break and eventually disintegrate under severe usage. In addition to destruction of the elements, which eventually require replacement, such degradation is particularly deleterious to the operation of a packed column in that as the ceramic elements break down, the height of the column tends to diminish and the operational effectiveness of the packed column is decreased. Furthermore, small particles broken from the elements tend to settle to the bottom of the column, eventually creating excess back pressure which requires a unit shutdown for removal of the broken elements and replacement. Even worse, small particles of broken ceramic tend to infiltrate the process equipment, on occasion causing great damage to pumps, valves and the like.

Lightweight but strong packing materials are desirable, since the total weight of the elements in a column tends to limit the height of the column which can be packed without crushing the elements at the bottom of the column. Another limitation concerning the size of the elements involves the plates or supports upon which various beds of the packing materials rest. Perforations must be provided in such supports which are smaller

than the smallest particle size used in the packing, or preferably the smallest particle size which may be generated from the packing, as in the case of broken ceramic packings. A bed of packing elements the size of grains of sand cannot be supported by a metal plate having perforations which are larger than the smallest of packing elements, or the elements would simply sift through the perforations. Thus, the perforated base support itself quickly becomes a primary cause of resistance of the passage of fluid through a packed column and support members.

It is apparent that packing materials or contactor elements for packed columns and the like could be produced with shapes, sizes and surface areas which provide a maximum contact area for the reaction while providing minimum pressure drop across the column. Such packing should of course be chemically inert with respect to the various phases of liquid and gases which it contacts. Contactor elements should also have high mechanical durability and be able to withstand turbulence, abuse and abrasion which might be encountered during process operations, at the same time being light enough so that elements in the bottom of a high packed column will not break due to the overburden weight of the column.

Attempts have been made to produce packing materials of synthetic polymers which are resistant to various corrosive chemicals and solvents, with mixed success. Although many synthetic polymers can be used to produce contactor elements having high surface area and relatively low weight, many of the elements thus produced lack rigidity and strength unless various reinforcement materials or fillers are included in the molding composition. The use of contactor elements with insufficient

rigidity is unsatisfactory in many cases, because under the turbulence of process operations the liquid-loaded packing will begin to oscillate, adversely affecting the process itself and eventually leading to breakdown of the packing materials, which requires shutdown for replacement. Furthermore, in many of these synthetic polymer molding compositions, the inclusion of reinforcing or filler additives decreases the resistance of the composition to corrosive chemicals and solvents, due to the discontinuities at the interfaces between foreign additives and the polymer itself. Thus, it can be seen that although a great deal of time and attention has been paid to attempting to develop improved contactor elements for packed columns and the like which have the strength and ability to withstand process conditions including liquid or gas turbulence, elevated temperatures and severe chemical environments, there is considerable room for improvement.

Therefore, it is an object of the present invention to provide a high-surface area contactor element which is resistant to fracture when subjected to abrasion, fluid turbulence and high loading due to the weight of the packed column. Another object of the present invention is to provide improved fluid contactor elements providing high surface area, specific volume, rigidity and strength combined with low unit weight. Yet another object of the invention is to provide such improved fluid contactor elements having high strength and rigidity without the need for reinforcement or filler additives in the molding compositions used.

Yet another object of the present invention is to provide improved fluid contactor elements having good resistance

to corrosive chemicals such as acids, bases and organic solvents at elevated temperatures, e.g. between about 200°F.-400°F.

A still further object of the invention is to provide fluid contactor elements achieving all the above objects, i.e., having high surface area, specific volume, rigidity and strength without the use of reinforcements or fillers, at the same time having good resistance to corrosive chemicals and solvents at elevated temperatures.

These and other objects, as well as the scope, nature and utilization of the claimed invention, will be apparent to those skilled in the art from the following detailed description, examples and the appended claims.

## Summary Of The Invention

These and other objects of the present invention are accomplished according to the present invention by providing a fluid contactor element formed from a composition consisting essentially of a self-reinforcing thermotropic liquid crystalline polymer.

Further in accordance with the present invention, in a preferred embodiment, a fluid contactor element is formed from a composition consisting essentially of a self-reinforcing thermotropic liquid crystalline polymer which is substantially free of reinforcing agents and fillers, selected from the group consisting of wholly aromatic polyesters, aromatic aliphatic polyesters, wholly aromatic poly(ester-amides), aromatic-aliphatic poly(ester-amides), aromatic polyazomethines, aromatic polyester carbonates, and mixtures of the foregoing.

## Brief Description of the Drawings

Fig. 1A shows the deterioration of prior art ceramic packing elements after an operational period in a chemical process tower.

Fig. 1B shows similar packing elements molded of a liquid crystalline polymer, substantially undamaged after a similar operational period in a chemical process tower.

Fig. 2 shows for comparative purposes the load-displacement curves developed in compression testing of saddle-shaped packing elements molded of a liquid crystalline polymer and a polyvinylidenedifluoride polymer.

## Description Of Preferred Embodiments

In accordance with the invention, it has been discovered that improved fluid contactor elements can be formed from compositions consisting essentially of self-reinforcing thermotropic liquid crystalline polymers, as described herein. These materials are found to provide a combination of very high strength, rigidity and resistance to corrosive chemicals and solvents, even at elevated temperatures and pressures, permitting the forming of contactor elements having high contact area, high specific volume, high strength and rigidity with relatively low unit weight. For purposes of this application, an alternative description of specific volume is "occupied volume", defined as the volume swept out by the outer extremities of the element, however irregular its shape, disregarding concavities. Because of the high strength and rigidity of these materials, elements providing high specific volume can be formed from relatively small quantities of polymer, and the elements will have a low

bulk density. Such contactor elements are found to be superior to similar elements molded of ceramics or prior art polymeric compositions for many chemical process applications.

The Thermotropic Liquid Crystalline Polymers

The polymer used in the compositions from which the contactor elements of the present invention are formed must be a thermotropic liquid crystalline polymer which is of the requisite molecular weight to be capable of undergoing the appropriate forming or molding process. Such thermotropic liquid crystalline polymers have been known in the art.

As is known in polymer technology, a thermotropic liquid crystalline polymer exhibits optical anisotropy in the melt. The anisotropic character of the polymer melt may be confirmed by conventional polarized light techniques whereby crossed-polarizers are utilized. More specifically, the anisotropic nature of the melt phase may conveniently be confirmed by the use of a Leitz polarizing microscope at a magnification of 40X with the sample on a Leitz hot stage and under a nitrogen atmosphere. The amount of light transmitted changes when the sample is forced to flow; however, the sample is optically anisotropic even in the static state. On the contrary, typical melt-processable polymers do not transmit light to any substantial degree when examined under identical conditions.

Representative classes of polymers from which the thermotropic liquid crystalline polymer suitable for use in the present invention may be selected include wholly aromatic polyesters, aromatic-aliphatic polyesters, wholly aromatic poly(ester-amides), aromatic-aliphatic poly(ester-amides),

aromatic polyazomethines, aromatic polyester-carbonates, and mixtures of the same. In preferred embodiments the thermotropic liquid crystalline polymer is a wholly aromatic polyester, or a wholly aromatic poly(ester-amide). In such wholly aromatic polyesters and wholly aromatic poly(ester-amide)s, each moiety present within the polymer chain contributes at least one aromatic ring. Also, it is preferred that naphthalene moieties be included in the thermotropic liquid crystalline polymer (e.g., 6-oxy-2-naphthoyl moiety, 2,6-dioxynaphthalene moiety, or 2,6-dicarboxynaphthalene moiety) in a concentration of not less than about 10 mole percent. A particularly preferred naphthalene moiety for inclusion in the thermotropic liquid crystalline polymer is the 6-oxy-2-naphthoyl moiety in a concentration of not less than about 10 mole percent.

Representative wholly aromatic polyesters which exhibit thermotropic liquid crystalline properties include those disclosed in the following United States Patents, which are herein incorporated by reference: 3,991,013; 3,991,014; 4,066,620; 4,067,852; 4,075,262; 4,083,829; 4,093,595; 4,118,372; 4,130,545; 4,146,702; 4,153,779; 4,156,070; 4,159,365; 4,161,470; 4,169,933; 4,181,792; 4,183,895; 4,184,996; 4,188,476; 4,201,856; 4,219,461; 4,224,433; 4,226,970; 4,230,817; 4,232,143; 4,232,144; 4,238,598; 4,238,599; 4,238,600; 4,242,496; 4,245,082; 4,245,084; 4,247,514; 4,256,624; 4,265,802; 4,267,304; 4,269,965; 4,279,803; 4,299,756; 4,294,955; 4,318,841; 4,337,190; 4,337,191; 4,355,134; and 4,473,682. As discussed hereinafter, the wholly aromatic polyester of U.S. Patent No. 4,161,470 is presently preferred for use in the present invention.

Representative aromatic-aliphatic polyesters which exhibit thermotropic liquid crystalline properties are copolymers of polyethylene terephthalate and hydroxybenzoic acid, as disclosed in Polyester X-7G-A Self-Reinforced Thermoplastic, by W. J. Jackson, Jr., H. F. Kuhfuss, and T. F. Gray, Jr., 30th Anniversary Technical Conference 1975 Reinforced Plastics Composites Institute, The Society of the plastics Industry, Inc., Section 17-D, Pages 1-4. A further disclosure of such copolymers can be found in "Liquid Crystal Polymers: I Preparation and Properties of p-Hydroxybenzoic Acid Copolymers," Journal of Polymer Science, Polymer Chemistry Edition, Vol. 14, pages 2043 to 2058 (1976), by W. J. Jackson, Jr., and H. F. Kuhfuss. See also, commonly assigned United States Patent Nos. 4,318,842 and 4,355,133, which are herein incorporated by reference.

Representative wholly aromatic and aromatic-aliphatic poly(ester-amides) which exhibit thermotropic liquid crystalline properties are disclosed in United States Patent Nos. 4,272,625; 4,330,457; 4,339,375; 4,341,688; 4,351,917; 4,351,918; and 4,355,132, which are herein incorporated by reference. As discussed hereafter, the poly(ester-amide) of United States Patent No. 4,330,457 is presently particularly preferred for use in the present invention. Such poly(ester-amide) has been found to possess an inherent propensity for its polymer chains to readily undergo orientation upon molding elements for use in accordance with the present invention.

Representative aromatic polyazomethines which exhibit thermotropic liquid crystalline properties are disclosed in United States Patent Nos. 3,493,522; 3,493,524; 3,503,739; 3,516,970; 3,516,971; 3,526,611; 4,048,148; and 4,122,070. Each

of these patents is herein incorporated by reference in its entirety. Specific examples of such polymers include poly(nitrilo-2-methyl-1,4-phenylenenitriloethylidyne-1,4-phenyleneethylidyne); poly(nitrolo-2-methyl-1,4-phenylenenitrilo-methylidyne-1,4-phenylene-methylidyne); and poly(nitrilo-2-chloro-1,4-phenylenenitrilomethylidyne-1,4-phenylenemethylidyne).

Representative aromatic polyester-carbonates which exhibit thermotropic liquid crystalline properties are disclosed in United States Patent Nos. 4,107,143; 4,284,757; and 4,371,660, which are incorporated by reference. Examples of such polymers include those consisting essentially of p-oxybenzoyl units, p-dioxyphenyl units, dioxycarbonyl units, and terephthaloyl units.

A thermotropic liquid crystalline polymer commonly is selected for use in the production of the molded contactor elements of the present invention which possesses a melting temperature within the range that is readily amenable to melt processing. For instance, thermotropic liquid crystalline polymers commonly are selected which exhibit a melting temperature somewhere within the range of approximately 250 to 400°C.

The thermotropic liquid crystalline polymer selected preferably also exhibits an inherent viscosity of at least about 2.0 dl./g. when dissolved in a concentration of 0.1 percent by weight in pentafluorophenol at 60°C (e.g., an inherent viscosity of approximately 2.0 to 15.0 dl./g.).

A preferred wholly aromatic polyester for use in the present invention is that disclosed in United States Patent No. 4,161,470, which is capable of forming an anisotropic melt phase at a temperature below approximately 350°C. This polyester

-f the recurring moieties I and II

wherein:



I is 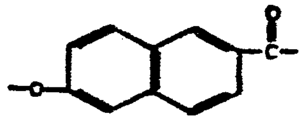 , and

II is 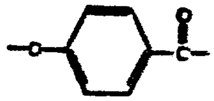 .

The polyester comprises approximately 10 to 90 mole percent of moiety I, and approximately 10 to 90 mole percent of moiety II. In one embodiment, moiety II is present in a concentration of approximately 65 to 85 mole percent, and preferably in a concentration of approximately 70 to 80 mole percent. In a particularly preferred embodiment, the wholly aromatic polyester consists essentially of approximately 27 mole percent of recurring 6-oxy-2-naphthoyl moieties and approximately 73 mole percent of recurring 4-oxybenzoyl moieties. In another embodiment, moiety II is present in a lesser proportion of approximately 15 to 35 mole percent, and preferably in a concentration of approximately 20 to 30 mole percent. In addition, at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, and mixtures thereof. Such polymer preferably has an inherent viscosity of approximately 3.5 to 10 dl./g. when dissolved in a concentration of 0.1 percent by weight in pentafluorophenol at 60°C.

The presently particularly preferred wholly aromatic poly(ester-amide) or aromatic-aliphatic poly(ester-amide) for use in the present invention is disclosed in commonly-assigned United States Patent No. 4,330,457, which is capable of forming an anisotropic melt phase at a temperature below approximately 400°C. The poly(ester-amide)s therein disclosed consist essentially of recurring moieties I, II, III, and optionally IV, wherein:

I is 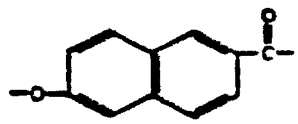 ,

II is $-\overset{O}{\overset{\|}{C}}-A-\overset{O}{\overset{\|}{C}}-$,

where A is a divalent radical comprising at least one aromatic ring or a divalent trans-1,4-cyclohexylene radical;

III is -Y-Ar-Z-, where Ar is a divalent radical comprising at least one aromatic ring, Y is O, NH, or NR, and Z is NH or NR, where R is an alkyl group of 1 to 6 carbon atoms or an aryl group; and

IV is -O-Ar'-O-, where Ar' is a divalent radical comprising at least one aromatic ring;

wherein at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, and

mixtures thereof, and wherein said poly(ester-amide) comprises approximately 10 to 90 mole percent of moiety I, approximately 5 to 45 mole percent of moiety II, approximately 5 to 45 mole percent of moiety III, and approximately 0 to 40 mole percent of moiety IV. The preferred dicarboxyaryl moiety II is:

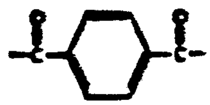 ,

the preferred moiety III is:

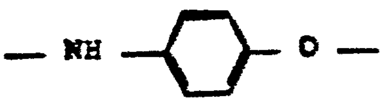 or 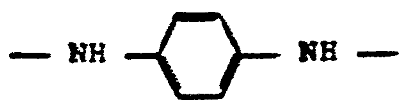 ,

and the preferred dioxyaryl moiety IV is:

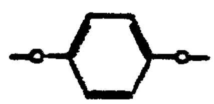 .

Such polymer preferably has an inherent viscosity of approximately 2.0 to 10 dl./g. when dissolved in a concentration of 0.1 percent by weight in pentafluorophenol at 60°C. Also, in a particularly preferred embodiment, the poly(ester-amide) is wholly aromatic and consists essentially of approximately 20 mole percent of recurring terephthaloyl moieties, and approximately 20 mole percent of recurring 4-oxyaminophenylene moieties.

It should be noted at this time that reference herein to a temperature below which a specific polymer may exhibit anisotropic properties in the melt phase is intended to refer to the temperature below which the polymer exhibits such properties prior to any heat treatment thereof. The chemical resistance of the polymer also increases with heat treatment and the solubility

in pentafluorophenol, one of the rare solvents for thermotropic liquid crystalline polymers, continuously decreases with increasing heat treatment time and eventually the material may not dissolve even minimally (such as in amounts of 0.1 percent by weight). Accordingly, reference herein to solubility characteristics of specific polymers is intended to refer to such characteristics prior to any heat treatment of the polymer.

The liquid crystalline polymers useful in this invention are self-reinforcing, providing exceptional strength and rigidity to contactor elements molded from compositions consisting essentially of such polymers. Thus, such contactor elements provide a combination of great strength, rigidity and chemical resistance compared to the many prior art polymers which require reinforcing agents or fillers for attaining sufficient strength in such applications, and thus offer reduced chemical resistance due to discontinuities in the molded polymer.

Although these liquid crystalline polymers are self-reinforcing as discussed above, one or more solid fillers and/or reinforcing agents optionally may be incorporated in the polymer which is capable of forming an anisotropic melt phase prior to melt-extrusion. Such solid fillers and or reinforcing agents should be of a size which will readily pass through the extrusion orifices and dies and which do not unduly interfere with the imposition of the desired polymeric orientation. Such fillers or reinforcing agents may be included in a concentration of approximately 1 to 50, preferably from approximately 10 to 40, percent by weight based upon the total weight of the composition.

Representative fillers include inorganic particulate matter or mineral fillers such as mica, talc, silica, alumina,

alumina trihydrate, calcium silicate, wollastonite, cordierite, clays, sodium aluminum carbonate, barium ferrite, glass, etc., and organic or carbon-based materials such as polytetrafluoroethylene, carbon black, graphite, etc. These fillers can take a variety of shapes, for example, glass fibers, beads, hollow spheres, flakes, etc.

Representative reinforcing additives include fibers of glass, amorphous carbon, graphitic carbon, asbestos, rock wool, metal, metal compounds, synthetic polymers, ceramic materials, etc.

## Formation of the Contactor Elements

Any suitable molding or forming process can be utilized for forming the contactor elements of the present invention from the molten liquid crystalline polymer, such as injection molding, thermoforming or extrusion and cutting. Injection molding is a preferred formation technique. Conventional injection molding techniques can be used. Particularly preferred techniques are disclosed in co-pending and commonly-assigned U.S. Patent Applications serial no. 414,560, filed September 3, 1982, and serial no. 689,326, filed January 7, 1985, which applications are hereby incorporated by reference. Extrusion and cutting techniques comparable to those described in U. S. Patent No. 3,506,248 for processing polyvinyl chloride and other plastics can be employed. Thermoforming processes can be used wherein sheets or other preforms of a liquid crystalline polymer are pressed into shape.

Once formed, the physical properties of these contactor elements of liquid crystalline polymers can be improved by

various heat treating processes. Heat treatment of the previously formed elements improves the properties of the contactor elements by increasing the molecular weight of the liquid crystalline polymers which are employed to form the elements and increasing the degree of crystallinity thereof, while also increasing the melting temperature of the polymer.

The elements may be thermally treated in an inert atmosphere (e.g., nitrogen, carbon dioxide, argon, helium) or alternatively, in a flowing oxygen-containing atmosphere (e.g., air). The use of a non-oxidizing substantially moisture-free atmosphere is preferred. For instance, the elements may be brought to a temperature approximately 10 to 30 centigrade degrees below the melting temperature of the liquid crystalline polymer, at which temperature the elements remain solid. It is preferable for the temperature of the heat treatment to be as high as possible without equaling or exceeding the melting temperature of the polymer. It is most preferable to gradually increase the temperature of heat treatment in accordance with the increase of the melting temperature of the polymer during heat treatment.

The duration of the heat treatment will commonly range from a few minutes to a number of days, e.g., from 0.5 to 200 hours, or more. Preferably, the heat treatment is conducted for a time of 1 to 48 hours and typically from about 5 to 30 hours.

Preferably, the heat treatment is conducted under conditions sufficient to increase the melting temperature of the polymer at least about 10 centigrade degrees. Most preferably, the melting temperature of the liquid crystalline polymer is increased from between about 20 to about 50 centigrade degrees as

a result of the heat treatment. The amount of increase which is obtained is somewhat dependent upon the temperature used in the heat treatment, with a higher heat treatment temperature generally giving greater increases.

High Surface Area Shapes for Contactor Elements

In accordance with the present invention, self-reinforcing thermotropic liquid crystalline polymers are used for forming contactor elements for use in towers or columns for separation and purification operations, including absorption, desorption, extraction, scrubbing, distillation, etc. The elements can be molded in any suitable shape which provides a suitably high surface area, specific volume and compression resistance per unit mass of the composition from which the elements are formed. The exceptional strength and rigidity properties and chemical resistance of these polymers at elevated temperatures permit a variety of shapes to be formed which provide the desired performance from a minimum mass of polymer composition, thus providing lightweight, low cost elements with superior performance properties.

Generally suitable shapes for the contactor elements are those which allow adjacent contactor elements in a packed tower to contact each other at a multiplicity of points, reducing the stress on each individual contactor element. Also, the contactor elements preferably are of a shape which enables them to orient themselves with respect to the walls in such a manner as to encourage the transfer liquid running down the column wall to be diverted back into the mass of the packing. In addition, tower packing or contactor elements should tend to improve the

efficiency of a packed column in that liquid migration to the vessel walls tends to be reduced and pressure drop tends to be reduced.

One of the better known prior art packing elements is the saddle, an example of which is shown in Figure 1 of U.S. Patent No. 4,333,893. As seen in that Figure, the element has an unusual saddle shape, with a multiplicity of scallops on at least two of its edges and a multiplicity of holes located in the body of the element. The element's configuration is designed such that two like elements cannot nestle too closely to each other in a packed bed, thus there is always maintained a substantial amount of space between any two adjacent elements even when they are in contact with each other. Saddles of substantially similar configuration were molded of liquid crystalline polymers for purposes of the testing described in the Examples herein.

Various cylindrical shaped elements are also useful, including the well known Raschig rings. Various cylindrical designs are shown in U.S. Patent No. 4,333,893 in Figures 2A, 2B, 5A-5D, 8A-8D, and 11A and 11B, including various forms of longitudinal convolutions which provide for greater numbers of contact points between adjacent elements. Elements in the form of hollow cylinders with corrugations lying in planes transverse to or oblique to the main axis of the cylinder are shown in U.S. Patent No. 3,882,027, Figures 1-4. In many cases, convolutions or corrugations added to a cylindrical shape will improve the rigidity of the element, thus enhancing even further the desirable properties of elements molded of liquid cystalline polymers in accordance with the invention. Other cylindrical shapes including one or more protuberances or ribs extending

inwardly from the inside wall of the member are shown in U.S. Patent No. 3,957,931. More complex shapes based upon cylindrical extruded stock and a process for extruding the materials are described in U.S. Patent No. 3,506,248.

Additionally, elements can be molded or formed in various angular shapes such as triangles, Y-shapes, L-shapes and the like, to be used in combination to form a packed bed, as described in U.S. Patent No. 4,511,519.

Thus, depending upon the application, liquid contactor elements can be molded of self-reinforcing thermotropic liquid crystalline polymers in accordance with the invention in any number of shapes, complex or simple, which will enable the attainment of the objectives of providing suitably high surface contact area, specific volume, strength and rigidity properties, low weight and high chemical resistance at elevated temperatures.

The following examples illustrate the superior performance obtained by forming fluid contactor elements from compositions comprising a self-reinforcing thermotropic liquid crystalline polymer. It should be understood, however, that the invention is not limited to the specific details set forth in the examples.

Example I

Saddle-shaped tower packing (about one inch wide) molded of a liquid crystalline polymer, a wholly aromatic polyester consisting essentially of approximately 27 mole percent of recurring 6-oxy-2-naphthoyl moieties and approximately 73 mole percent of 4-oxybenzoyl moieties, were installed in the top and

bottom sections of a large recovery still used to separate aromatic hydrocarbons from streams containing mainly water and formic acid at a temperature of about 104°C. The still was operated for a three month (5000 hours) test of the packing, then opened for inspection. The appearance of the packing was excellent, with no degradation evident in either top or bottom beds. Saddles recovered from the tower after the test period were substantially unchanged, as shown in FIG. 1B, while the conventional prior art ceramic saddles when used under comparable conditions were abraded, chipped, or broken into shards, as shown in FIG. 1A.

During the three-month test run, there were no pump failures associated with packing fragments damaging the pump seals, nor shut-downs due to plugging of the column by broken, compressed packing fragments. Such problems were prevalent with the ceramic packings in use.

The breakup of ceramic packing typically results in a settling of the packed bed, reducing its efficiency, and the settling of the fine fragments to the bottom tends to clog the column, create back-pressure, and damage pumps and other equipment.

Calculated on an annualized basis, the product yield also increased significantly by use of the packing molded of liquid crystalline polymer.

A loss of bed height of only about four inches was observed, compared with the losses of three feet or more typically observed in the past with ceramic packings over comparable operating periods, due to hydraulic action on the packing causing breakage and erosion.

## Example II

FIG. 2 illustrates the results of tests of the mechanical compression properties of samples of distillation column packing materials molded from a liquid crystalline polymer resin as described in Example I and Kynar® polyvinylidenedifluoride. Saddle-shaped items similar to those shown in FIG. 1A were used, being about 1 inch wide, and tested for compression (in a direction perpendicular to the longitudinal direction only) using a set of parallel plates in an Instron tester. The samples were compressed at a rate of 0.05 inches per minute, each being compressed to half the original part thickness (0.5 inch).

FIG. 2 shows that saddles molded of these two polymers had very different compressive behavior. The polyvinylidenedifluoride part required about 15 pounds force to compress the part to 0.3 inches, or 30 percent deformation. The liquid crystalline polymer part required a force of over 60 pounds for the comparable compression strain of 30 percent. Elements molded of liquid crystalline polymers are expected to show much better mechanical integrity and dimensional stability than those molded of other available plastics such as polyvinylidenedifluoride due to their superior stiffness and strength.

## Example III

Table I lists typical physical properties of molded samples of various prior art tower packing materials and liquid crystalline polymers typical of those used in the present invention.

Table I

| | Ceramic | CPVC[1.] | PVDF[2.] | Liq. Cryst[...] Polymer |
|---|---|---|---|---|
| Tensile Strength, Kpsi | 7.0 | 8.3 | 6.3 | 23 |
| Tensile Modulus, x $10^6$ psi | -- | 0.4 | 0.2 | 1.4 |
| Flexural Strength, Kpsi | 8.5 | 14.5 | 9.7 | 24 |
| Flexural Modulus, x $10^6$ psi | 10.00 | 0.4 | 0.22 | 1.3 |
| Impact (Notched Izod) Ft.-Lb./In. | 0.1 | - | 6.5 | 8.0 |
| Specific Gravity | 2.61 | 1.52 | 1.77 | 1.35 |
| Heat Deflection Temp. at 264 psi °F. | - | 212 | 230 | 355 |

1. = Chlorinated polyvinylchloride

2. = Polyvinylidenedifluoride

It can be seen that for the types of polymers listed, the liquid crystalline polymer selected is superior to the other polymers and ceramics in tensile strength, tensile modulus, and flexural strength. The liquid crystalline polymer is also superior to the other polymers in flexural modulus and impact strength, with the ceramic samples being higher in flexural modulus but having almost no impact strength, as is common for these relatively brittle materials. The liquid crystalline polymer is also superior in heat deflection temperature to the other polymers. In specific gravity, the liquid crystalline polymer is much lighter than the ceramic, and lighter than the other two polymers as well.

Thus, tower packing materials molded of liquid crystalline polymers would be expected to overcome such known deficiencies of ceramic packing materials as lack of impact toughness, low resistance to thermal shock and high weight.

Furthermore, the high rigidity and strength of the liquid crystalline polymers make them superior to most chemically-resistant plastics, which typically are not as rigid or strong to begin with, do not retain their rigidity well, and become less chemically resistant when reinforcements or fillers are used.

Bulk tower packings molded of liquid crystalline polymers are also found to offer an initial cost advantage over packings of competitive polymers, due in part to their excellent strength and rigidity properties combined with low density. Saddle-shaped packings molded of the liquid crystalline polymers were 30 to 50 percent less expensive than similar packings molded of commercial polymers such as a 30 percent glass-filled ethylenetetrafluoroethylene or a 25 percent glass filled ethylenechlorotrifluoroethylene.

Example IV

Standarized specimens i.e., the saddle-shaped packings approximately 2 inches (length) by 1 inch (width) of a liquid crystalline polymer as described in Example I were immersed in various corrosive media at elevated temperatures using procedures based upon ASTM D543, the Chemical Resistance Protocol, and removed periodically for testing of various physical parameters. The test solutions were stirred every 24 hours with manual tumbling. Conditioned specimens were rinsed under running tap water, wiped dry with paper towels after rinsing and conditioned overnight before testing. Fresh charges of test solutions were provided after the removal of each test specimen.

Results obtained by physical testing of the specimens in accordance with standard ASTM tests are shown in Table II.

## Table II

### Chemical Resistance Data, Liquid Crystalline Polymer

| | TS | TE | TM | FS | FM | WT.% (-) | T% (-) | L.% (-) | WI.% (-) | H Rock.M |
|---|---|---|---|---|---|---|---|---|---|---|
| 93% $H_2SO_4$ 250°F. | | | | | | | | | | |
| Control | -- | -- | -- | -- | -- | -- | -- | -- | -- | 64 |
| 3 days | 27.8 | 5 | 1.48 | 21.3 | 1.01 | 1.5 | 0.8 | 0 | 0.40 | 64 |
| 7 " | 27.4 | 5 | 1.50 | 20.9 | 1.00 | 1.8 | 0.8 | 0.02 | 0.40 | 65 |
| 14 " | 27.0 | 4 | 1.46 | 21.0 | 0.99 | 5.7 | 1.6 | 0.02 | 0.41 | 63 |
| 30 " | 25.9 | 4 | 1.46 | 20.7 | 1.01 | 6.8 | 2.5 | 0.02 | 0.82 | 60 |
| 375°F. | | | | | | | | | | |
| 3 days | 27.6 | 5 | 1.51 | 21.6 | 1.12 | 2.3 | 0 | 0 | 0.20 | 63 |
| 7 " | 27.3 | 5 | 1.54 | 21.4 | 1.08 | 2.5 | 0.8 | 0.01 | 0.40 | 63 |
| 14 " | 26.9 | 5 | 1.48 | 20.9 | 1.08 | 6.8 | 1.6 | 0.02 | 0.40 | 61 |
| 30 " | 26.7 | 4 | 1.49 | 20.9 | 1.06 | 10.3 | 2.5 | 0.02 | 0.60 | 62 |
| 70% $HNO_3$ 190°F. | | | | | | | | | | |
| 3 days | 27.0 | 5 | 1.63 | 25.1 | 1.39 | 0.13 | 0 | 0 | 0 | 64 |
| 7 " | 26.8 | 4 | 1.60 | 24.3 | 1.38 | 0.30 | 0.8 | 0 | 0 | 63 |
| 14 " | 26.2 | 4 | 1.61 | 24.0 | 1.34 | 0.32 | 0.8 | 0.80 | 0.40 | 61 |
| 30 " | 26.1 | 4 | 1.57 | 23.1 | 1.29 | 1.20 | 1.60 | 1.60 | 0.40 | 60 |
| 250°F. | | | | | | | | | | |
| 3 days | 26.8 | 4 | 1.60 | 21.3 | 1.32 | 0.26 | 0 | 0 | 0 | 62 |
| 7 " | 26.0 | 4 | 1.54 | 20.9 | 1.19 | 1.20 | 0.80 | 0 | 0 | 59 |
| 14 " | 25.8 | 4 | 1.49 | 21.0 | 0.93 | 1.20 | 1.60 | 1.60 | 0.40 | 60 |
| 30 " | 25.0 | 4 | 1.40 | 20.6 | 0.63 | 2.40 | 1.60 | 1.60 | 0.80 | 56 |
| 70% $H_2CrO_4$ 190°F. | | | | | | | | | | |
| 3 days | 27.1 | 5 | 1.51 | 24.0 | 1.44 | 0.13 | 0 | 0 | 0 | 61 |
| 7 " | 26.9 | 3 | 1.47 | 23.9 | 1.44 | 0.64 | 0 | 0.01 | 0 | 60 |
| 14 " | 27.0 | 5 | 1.50 | 23.6 | 1.45 | 1.80 | 0 | 0.01 | 0 | 60 |
| 30 " | 26.8 | 4 | 1.46 | 23.5 | 1.46 | 1.70 | 0 | 0.01 | 0 | 61 |
| 250°F. | | | | | | | | | | |
| 3 days | 28.0 | 5 | 1.48 | 21.3 | 1.39 | 1.70 | 0 | 0.01 | 0 | 63 |
| 7 " | 27.6 | 5 | 1.45 | 21.6 | 1.25 | 2.7 | 0.80 | 0.01 | 0 | 60 |
| 14 " | 25.7 | 5 | 1.45 | 20.9 | 1.07 | 6.2 | 1.60 | 0.01 | 0.60 | 59 |
| 30 " | 26.7 | 4 | 1.39 | 20.2 | 0.94 | 8.1 | 2.5 | 0.01 | 0.60 | 54 |

TS = Tensile Strength-Kpsi } ASTM
TE = Tensile Elongation % } D-638
TM = Tensile Modulus-Mpsi }
FS = Flexural Strength-Kpsi } ASTM
FM = Flexural Modulus-Mpsi } D-790

WT.% = Weight Change
T% = Thickness Change
L.% = Length Change
WI.% = Width Change
H = Hardness - Rockwell M Scale

These data show that a specimen molded from a typical liquid crystalline polymer substantially retains its physical strength and flexural properties for up to at least about 30 days at elevated temperatures in 93 percent $H_2SO_4$, 70 percent $HNO_3$ or 70 percent $H_2CrO_4$.

Identical standardized specimens were immersed in basic corrosive media at elevated temperatures, using procedures similar to those described above, except the test solutions were not stirred, the specimens were air-dried without rinsing, and the test solutions were not replenished after each specimen was removed.

Results obtained by physical testing of the specimens in accordance with standard ASTM tests are shown in TABLE III.

TABLE III

Chemical Resistance Data, Liquid Crystalline Polymer

| | TS (Kpsi) | TM (Mpsi) | FS (Kpsi) | FM (Mpsi) | WT (gm) | Width (in.) | Thick (in.) |
|---|---|---|---|---|---|---|---|
| 10% NaOH 190° F. | | | | | | | |
| 0 days | - | - | - | - | 15.42 | 0.493 | 0.122 |
| 30 days | 28.6 | 1.19 | 22.3 | 1.22 | 15.40 | 0.493 | 0.122 |
| 60 days | 26.9 | 1.38 | 19.9 | 1.14 | 15.25 | 0.491 | 0.121 |
| 90 days | 23.4 | 1.44 | 19.1 | 1.10 | 15.20 | 0.490 | 0.120 |
| 20% NaOCl 190°F. | | | | | | | |
| 0 days | - | - | - | - | 15.43 | 0.493 | 0.122 |
| 30 days | 26.0 | 1.44 | 23.9 | 0.92 | 15.41 | 0.493 | 0.122 |
| 60 days | 26.3 | 1.42 | 23.6 | 0.86 | 15.40 | 0.493 | 0.122 |
| 90 days | 26.4 | 1.44 | 22.6 | 1.07 | 15.37 | 0.492 | 0.121 |

TS = Tensile Strength-Kpsi    ASTM
TE = Tensile Elongation %    D-638
TM = Tensile Modulus-Mpsi
FS = Flexural Strength-Kpsi    ASTM
FM = Flexural Modulus-Mpsi    D-790

These data show that a specimen molded from a typical liquid crystalline polymer substantially retains its physical strength, flexural and dimensional properties for periods up to at least about 60 to 90 days at elevated temperatures in 10 percent NaOH or 20 percent NaOCl.

## Example V

A series of liquid crystalline polymer samples similar to those of Example I were tested at 250°C. in 93 percent $H_2SO_4$ to determine the effects of the removal of a surface layer (30 mils from each side) and heat treatment of the molded shapes on the stability of physical properties. Data for these tests are presented in Table IV.

### Table IV

Chemical Resistance Data, Liquid Crystalline Polymer* Samples With Surface Layer Removed, or Heat Treated

| | TS | TE | TM | FS | FM | WT.% (-) | T% (-) | L.% (-) | WI.% (-) | H Rock.M |
|---|---|---|---|---|---|---|---|---|---|---|
| 93% $H_2SO_4$ 250°F. | | | | | | | | | | |
| Control | -- | -- | -- | -- | -- | -- | -- | -- | -- | 66 |
| (thin) 3 days | 25.4 | 4 | 1.43 | 20.7 | 0.96 | 2.5 | 0.82 | 0.02 | 0.41 | 64 |
| 7 " | 24.8 | 4 | 1.45 | 20.9 | 0.94 | 5.7 | 0.82 | 0.02 | 0.41 | 63 |
| 14 " | 24.9 | 4 | 1.45 | 21.2 | 0.95 | 6.8 | 1.6 | 0.04 | 0.82 | 64 |
| 30 " | 24.0 | 5 | 1.48 | 2.06 | 0.89 | 9.6 | 2.4 | 0.08 | 1.60 | 62 |
| (HT) 3 days | 27.1 | 4 | 1.51 | 21.9 | 1.01 | 1.8 | 0 | 0 | 0 | 70 |
| 7 " | 27.9 | 4 | 1.48 | 21.1 | 0.97 | 2.5 | 0 | 0 | 0.41 | 66 |
| 14 " | 26.9 | 4 | 1.47 | 21.1 | 0.98 | 3.2 | 0.8 | 0 | 0.41 | 66 |
| 30 " | 27.0 | 3 | 1.43 | 20.8 | 0.95 | 5.7 | 0.8 | 0.02 | 0.41 | 67 |
| Control | -- | -- | -- | -- | -- | -- | -- | -- | -- | 73 |

*A wholly aromatic polyester, as described in Example I

TS = Tensile Strength-Kpsi
TE = Tensile Elongation %
TM = Tensile Modulus-Mpsi
FS = Flexural Strength-Kpsi
FM = Flexural Modulus-Mpsi

WT.% = Weight Change
T% = Thickness Change
L.% = Length Change
WI.% = Width Change
H = Hardness - Rockwell M Scale

Comparing these data to the 250°F. tests in 93 percent $H_2SO_4$ in Table II, Example II, it can be seen that thinned-down specimens showed only marginally lower resistance to such treatment, indicating that the core areas of the molded parts are no more sensitive than the skin, and thus abrasion of the part in

service should not lead to rapid deterioration. The heat-treated specimens show an apparent modest improvement in retention of physical properties, compared with the 250°F. data in Table II.

## Example VI

Based upon the tests above, and further tests of moldings of liquid crystalline polymer as described in Example I in various media at room and elevated temperatures, a qualitative ranking of liquid crystalline polymer stability in various selective chemical media has been developed, and is presented in Table V.

### Table V

| At Room Temperature | | At 190°F. and Above |
|---|---|---|
| | Fair-Poor | |
| Sodium Hydroxide (50%) | | Sodium Hydroxide (50%)<br>Sulfuric Acid (93%)<br>Nitric Acid (70%) |
| Sulfuric Acid (93%)<br>Sodium Hydroxide (10%)<br>Nitric Acid (70%) | | Chromic Acid (70%)<br>Sodium Hydroxide (10%)<br>Sulfuric Acid (70%)<br>Nitric Acid (10%) |
| | Excellent | |
| Sodium Hypochlorite (20%)<br>Nitric Acid (10%)<br>Sodium Hypochlorite (5%)<br>Chromic Acid (70%)<br>Sulfuric Acid (70%)<br>Sulfuric Acid (37%)<br>Hydrochloric Acid (37%) | | Hydrochloric Acid (37%)<br>Sulfuric Acid (37%)<br>Sodium Hypochlorite (20%)<br>Sodium Hypochlorite (5%) |
| Chromic Acid (10%)<br>Sulfuric Acid (5%)<br>Plating Solution<br>Air | | Chromic Acid (10%)<br>Sulfuric Acid (5%)<br>Plating Solution<br>Air |

## Example VII

For comparison with the liquid crystalline polymers used in the packing materials of the present invention, literature data were assembled for chemical resistance properties of selected synthetic polymers. These data are presented in Table VI. Although direct comparisons or numerical rankings of these resins with liquid crystalline polymers are not meaningful due to the different test conditions used, it is apparent that liquid crystalline polymers are at least comparable to these competitive products over a broad range of organic and inorganic chemicals, and probably superior in many respects.

### Table VI

| | Polymer A | Polymer B | Polymer C | Polymer D |
|---|---|---|---|---|
| Chromic Acid | 50% 170°F. | Conc.[4/], B.P., (257°F.) | 50%, Refl.[3/] (232°F.) | Conc.[4/]200°F. (approx.) |
| Hydrochloric Acid | 35%, 275°F. | Conc.[4/], B.P., (223°F.) | 37%, Refl.[3/] (221°F.) | 37%, 200°F. |
| Nitric Acid | 50%, 120°F. | 70%, 140°F.[1] | 70%, 212°F. (approx.) | Conc.[4/],200°F. |
| Sulfuric Acid | 85%, 212°F. | Conc.[4/], 302°F.[2] | 78%, 250°F. (approx.) | 98%, 200°F. |
| 98%, RT | - - | - - | - - | |
| Sodium Hydroxide | 10%, 170°F. | - - | - - | - - |
| 50%, 120°F. | 50%, 248°F. | 50%,250°F. | 50%, 200°F. | |

A = Polyvinylidenedifluoride
Qualitative, up to 3 months
B = TEFZEL, (ETFE), a polyethylene tetrafluoroethylene fluoropolymer
7-day data, 15% change considered insignificant
C = HALAR, (ECTFE, a polyethylene chlorotrifluoroethylene fluoropolymer
11-day data, 25% change considered insignificant
D = Ryton R-4 polyphenylene sulfide,
40% glass filled, qualitative
RT = room temperature
1 = 53-day exposure
2 = 6-hour exposure
3 = Refluxed
4 = Concentrated

Although the invention has been described with preferred embodiments, it is to be understood that variations and modifications may be employed without departing from the concept of the invention as defined in the following claims.

1. A fluid contactor element formed from a composition consisting essentially of a self-reinforcing thermotropic liquid crystalline polymer.

2. An element in accordance with claim 1 which is useful for packing a tower or column useful in separation and purification operations.

3. An element in accordance with claim 2, wherein said separation operations include absorption, desorption, extraction, scrubbing, and distillation.

4. An element in accordance with claim 1, having a shape which provides high surface area, specific volume and compression resistance per unit mass of the composition from which said element is formed.

5. An element in accordance with claim 4, wherein said shape is selected from the group consisting of saddles, rings, cylinders, scalloped or corrugated cylinders, hollow spheres, angular shapes and irregular hollow structures.

6. An element in accordance with claim 1, formed by a process selected from the group consisting of injection molding, thermoforming, and melt extrusion and cutting.

7. An element in accordance with claim 1, wherein said composition comprises at least one additive selected from the group consisting of reinforcing agents and fillers.

8. An element in accordance with claim 7, wherein said at least one additive is present in a concentration of approximately 1 to 50 weight percent of said composition.

9. An element in accordance with claim 7 wherein said reinforcing agent is a fiber of at least one of glass, amorphous carbon, graphitic carbon, asbestos, rock wool, metal, metal compounds, synthetic polymers, and ceramic materials.

10. An element in accordance with claim 7 wherein said filler is at least one of particulate glass, mica, talc, silica, alumina, alumina trihydrate, calcium silicate, wollastonite, cordierite, clay, sodium aluminum carbonate, barium ferrite, polytetrafluoroethylene, carbon black and graphite.

11. An element in accordance with claim 1 wherein said composition is substantially free of reinforcing agents and fillers.

12. An element in accordance with claim 1 wherein said polymer is selected from the group consisting of wholly aromatic polyesters, aromatic aliphatic polyesters, wholly aromatic poly(ester-amides), aromatic-aliphatic poly(ester-amides), aromatic polyazomethines, aromatic polyester carbonates, and mixtures of the foregoing.

13. An element in accordance with claim 1 wherein said liquid crystalline polymer is wholly aromatic in the sense that each moiety present contributes at least one aromatic ring.

14. An element in accordance with claim 1 wherein said liquid crystalline polymer is a wholly aromatic polyester.

15. An element in accordance with claim 1 wherein said liquid crystalline polymer is a wholly aromatic poly(ester-amide).

16. An element in accordance with claim 1 wherein said liquid crystalline polymer includes not less than about 10 mole percent of recurring units which include a naphthalene moiety.

17. An element in accordance with claim 16 wherein said naphthalene moiety is selected from the group consisting of 6-oxy-2-naphthoyl moiety, 2,6-dioxynaphthalene moiety, and 2,6-dicarboxynaphthalene moiety.

18. An element in accordance with claim 1 wherein said liquid crystalline polymer is a wholly aromatic polyester consisting essentially of moieties I and II, which may include substitution of at least some of the hydrogen atoms present upon an aromatic rings, wherein:

I is 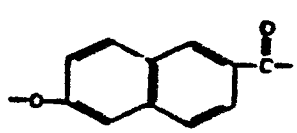 , and

II is 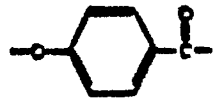 ,



with said substitution if present being selected from the group consisting of an alkyl group having from 1 to about 4 carbon atoms, an alkoxy group having from 1 to about 4 carbon atoms, halogen, phenyl, and combinations thereof, and wherein said wholly aromatic polyester contains approximately 10 to 90 mole percent of moiety I and approximately 10 to 90 mole percent of moiety II.

19. An element in accordance with claim 1 wherein said thermotropic liquid crystalline polymer consists essentially of approximately 27 mole percent of recurring 6-oxy-2-naphthoyl moieties and approximately 73 mole percent of recurring 4-oxybenzoyl moieties.

20. An element in accordance with claim 1 wherein said liquid crystalline polymer is a poly(ester-amide) consisting essentially of moieties I, II and III, and optionally IV, wherein

I is 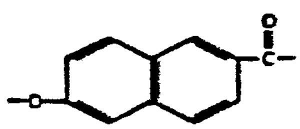 ,

II is $-\overset{O}{\overset{\|}{C}}-A-\overset{O}{\overset{\|}{C}}-$ ,

where A is a divalent radical comprising at least one aromatic ring or a divalent trans-1,4-cyclohexylene radical;

III is -Y-Ar-Z-, where Ar is a divalent radical comprising at least one aromatic ring, Y is O, NH or NR, and Z is NH or NR, where R is an alkyl group having from 1 to about 6 carbon atoms; and

IV is - O - Ar' - O - where Ar' is a divalent radical comprising at least one aromatic ring;

wherein at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, and combinations thereof, and wherein said poly(ester-amide) comprises approximately 10 to 90 mole percent of moiety I, approximately 5 to 45 mole percent of moiety II, approximately 5 to 45 mole percent of moiety III, and approximately 0 to 40 mole percent of moiety IV.

21. An element in accordance with claim 1 wherein said thermotropic liquid crystalline polymer consists essentially of approximately 60 mole percent of recurring 6-oxy-2-naphthoyl moieties, approximately 20 mole percent of recurring terephthaloyl moieties, and approximately 20 mole percent of recurring 4-oxyaminophenylene moieties.

22. An element in accordance with claim 1 which is physically and chemically stable after aging in 93 percent $H_2SO_4$ at 375°F. for 30 days, retaining substantially unchanged tensile and flexing properties as measured by ASTM D-638 and D-790.

23. An element in accordance with claim 1 which is physically and chemically stable after aging in 70 percent $HNO_3$ at 190°F. for 30 days, retaining substantially unchanged tensile and flexing properties as measured by ASTM D-638 and D-790.

24. An element in accordance with claim 1 which is physically and chemically stable after aging in 10 percent NaOH at 190°F. for 30 days, retaining substantially unchanged tensile and flexing properties as measured by ASTM D-638 and D-790.

25. An element in accordance with claim 1 which has been heat treated to improve its physical properties and chemical resistance.

26. A fluid contactor element formed from a composition consisting essentially of a self-reinforcing thermotropic liquid crystalline polymer which is substantially free of reinforcing agents and fillers, selected from the group consisting of wholly aromatic polyesters, aromatic aliphatic polyesters, wholly aromatic poly(ester-amides), aromatic-aliphatic poly(ester-amides), aromatic polyazomethines, aromatic polyester carbonates, and mixtures of the foregoing.

Fig. 1A

PRIOR ART

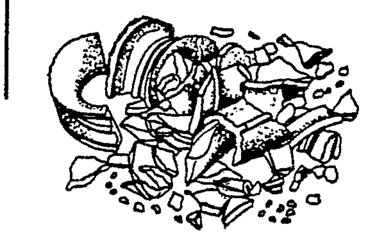

Fig. 1B

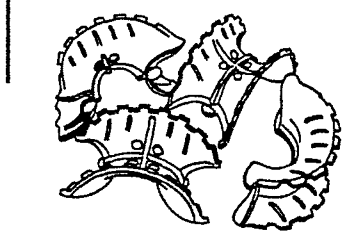

Fig. 2

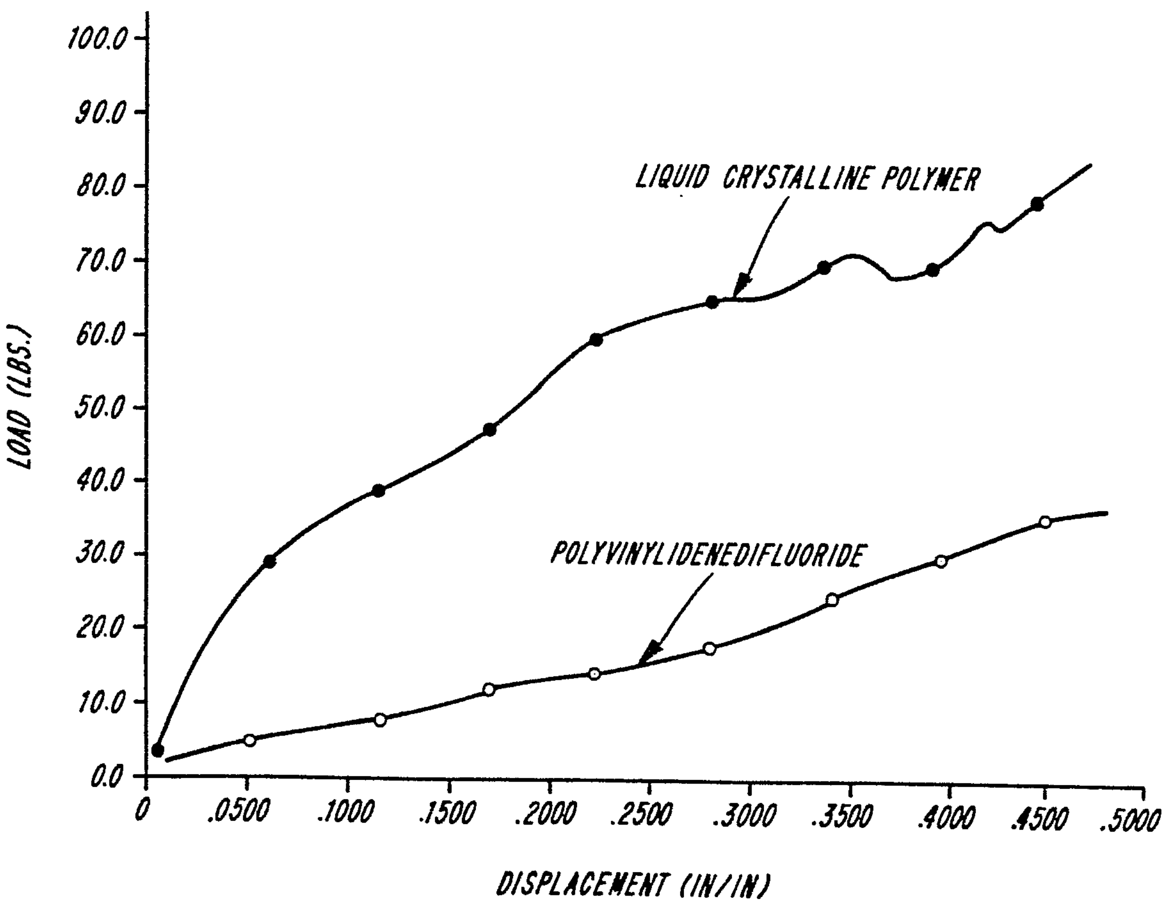

European Patent Office

# EUROPEAN SEARCH REPORT

0207644
Application number

EP 86 30 4285

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE-B-1 081 425 (DEUTSCHE AKADEMIE DER WISSENSCHAFTEN ZU BERLIN)<br>* Whole document *<br>--- | 1-5,12 | B 01 D 53/20 |
| A | FR-A-2 238 522 (VYSOKA SKOLA CHEMICKO-TECHNOLOGICKA)<br>* Page 2, lines 12-21; page 4, lines 18-29; page 6, line 34 - page 7, line 3 *<br>--- | 1-5,12 | |
| A,D | GB-A-2 006 242 (CELANESE CORP.)<br>* Page 1, lines 107-114; page 2, lines 13-18; page 2, lines 74-80; claims 1,14,39,44,45 *<br>--- | 1,6-9, 13,14, 16-18 | |
| | | | TECHNICAL FIELDS SEARCHED (Int Cl 4) |
| A,D | US-A-4 330 457 (A.J. EAST)<br>* Column 10, line 13 - column 11, line 12; claims 1,56 *<br>----- | 1,6-10 ,12,13 ,15-17 ,20,21 ,25 | B 01 D 53/00<br>F 28 F 25/00<br>C 08 G 63/00<br>C 08 G 69/00 |

The present search report has been drawn up for all claims

| Place of search | Date of completion of the search | Examiner |
|---|---|---|
| THE HAGUE | 08-10-1986 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document